# EUROPÄISCHE PATENTSCHRIFT

(11) **EP 1 800 805 B1**
(45) Veröffentlichungstag und Bekanntmachung des Hinweises auf die Patenterteilung: **28.07.2010**
(21) Anmeldenummer: 06126077.4
(22) Anmeldetag: 14.12.2006
(51) Int. Cl.: B25D 17/04, B25F 5/00, F16F 1/02, F16F 3/02

(54) **Handgriff eines handgeführten Werkzeuggerätes**
Handle of a hand held tool
Poignée d'un outil à main

(30) Priorität: 23.12.2005 DE 102005000205
(43) Veröffentlichungstag der Anmeldung: 27.06.2007
(73) Patentinhaber: HILTI Aktiengesellschaft, 9494 Schaan (LI)
(72) Erfinder: Pfeiffer, Ralf, 89567, Sontheim (DE); Holzmeier, Georg, 86836, Untermeitingen (DE)
(74) Vertreter: Wildi, Roland

(56) Entgegenhaltungen:
- EP-A- 0 849 492
- WO-A-02/083369
- DE-A1- 10 130 548
- US-A- 3 266 758

## Beschreibung

Die Erfindung betrifft einen Handgriff für ein handgeführtes Werkzeuggerät, wie beispielsweise ein Bohr- oder Meisselgerät, der ein Griffelement aufweist, an dem ein Bediener den Handgriff beziehungsweise das Werkzeuggerät in komfortabler Weise ergreifen kann. Ferner weist der Handgriff ein Lagerelement zur lösbaren oder dauerhaften Festlegung an dem Handwerkzeuggerät auf. Das Griffelement und das Lagerelement sind dabei über eine Entkopplungseinrichtung zur teilweisen Schwingungsentkoppelung des Griffelementes von dem Lagerelement verbunden. Hierbei ist das Griffelement gegenüber dem Lagerelement durch die Entkopplungseinrichtung lagefest geführt, das heisst dass das Griffelement bei einer Relativbewegung gegenüber dem Lagerelement eine gleich bleibende Ausrichtung beibehält. Ferner betrifft die Erfindung ein Handwerkzeuggerät mit einem derartigen Handgriff.

Ein derartiger Handgriff hat dabei den Vorteil, dass die Entkoppelung in einer bestimmten Richtung erfolgt, während relativ zu den anderen Richtungen eine relativ stabile Führung gewährleistet wird. Hierdurch wird dem Bediener trotz einer stark geminderten Vibration am Griffelement ein sicheres Gefühl bei der Führung des Werkzeuggerätes im Betrieb vermittelt.

DE 101 30 548 beschreibt einen Zusatzhandgriff für eine Handwerkzeugmaschine bei dem das Griffelement über eine Lagereinheit parallel zu einer Bearbeitungsrichtung des Werkzeuggerätes translatorisch geführt ist. Hierzu ist das Griffelement mit einem Schlitten verbunden, der in einer Schienenführung entgegen einer Federeinrichtung verschiebbar gehalten ist.

Nachteilig an dem bekannten Handgriff ist, dass die Lagereinheit für die translatorische Führung des Griffelementes einen sehr aufwändigen und sperrigen Aufbau aufweist.

Aus dem Dokument EP 0 849 492 A ist eine Schleifwerkzeugmaschine mit einer gedämpften Aufhängung der Antriebseinheit gemäß dem Oberbegriff des Anspruchs 1 bekannt. Dämpfelemente weisen mehrere zueinander in Y-Richtung parallel angeordnete, elastische Platten auf. Die Dämpfelemente ermöglichen eine freie Bewegung in Y Richtung und hindern eine Bewegung senkrecht zur Y-Richtung.

Eine Dämpfung mit einer freien Bewegung in mehreren Richtung zur Anwendung in Raketen und Lenkwaffen wird durch entlang einer Mantelfläche angeordnete, flexible Stäbe erreicht.

Der vorliegenden Erfindung liegt die Aufgabe zugrunde, bei einem Handgriff die genannten Nachteile zu vermeiden und bei geringen Herstellungskosten eine komfortable Handhabung zu gewährleisten.

Erfindungsgemäss wird diese Aufgabe durch die Merkmale des Anspruchs 1 gelöst. Hierdurch kann das Griffelement in besonders einfacher konstruktiver Weise von dem Lagerelement entkoppelt werden, wobei die parallel auslenkbaren Entkopplungselemente der Entkopplungseinrichtung gleichzeitig für eine lagefeste Führung des Griffelementes sorgen. Dabei weist das Griffelement während einer durch die Entkopplungselemente zwangsgeführten Relativbewegung gegenüber dem Lagerelement beziehungsweise gegenüber dem Werkzeuggerät eine gleich bleibende Ausrichtung auf. Auf diese Weise wird eine stabile Führung des Werkzeuggerätes bei stark verminderter Schwingungsübertragung auf das Griffelement ermöglicht. Zudem kann eine derartige Entkopplungseinrichtung sehr kompakt ausgeformt werden, so dass sie leicht in das Handwerkzeuggerät oder einen Zusatzhandgriff integriert werden kann und es im Betrieb zu keinen Behinderungen beispielsweise durch Verkantungen der Entkopplungseinrichtung kommt. Insgesamt wird somit bei geringen Herstellungskosten des Handgriffes eine komfortable Handhabung im Betrieb ermöglicht.

Vorteilhafterweise sind die Entkopplungselemente durch ein drahtförmiges Material gebildet, wodurch die Herstellungskosten besonders gering sind.

Bevorzugterweise ist das drahtförmige Material aus Federstahl gebildet, wodurch eine besonders stabile Entkopplungseinrichtung bereitgestellt wird, die über ihre Lebensdauer annähernd gleich bleibende Verformungseigenschaften aufweist und somit für eine dauerhaft komfortable Vibrationsminderung am Griffelement sorgt.

Alternativ hierzu ist das drahtförmige Material aus Faserkunststoffen hergestellt, wodurch sich besonders geeignete Materialeigenschaften herstellen lassen, die zu einer optimierten Schwingungsentkoppelung des Handgriffes vom Handwerkzeuggerät führen.

Ferner sind an dem Lagerelement vorteilhafterweise Befestigungsmittel vorgesehen, die an Gegenbefestigungsmitteln des Handwerkzeuggerätes lösbar befestigbar sind. Hierdurch kann der Handgriff als bedarfsweise einsetzbarer Zusatzhandgriff, beispielsweise in Form eines Seitenhandgriffes verwendet werden.

Bevorzugterweise sind dabei genau vier Entkopplungselemente vorgesehen. Bei dieser Anzahl der Entkopplungselemente konnte eine besonders gute Schwingungsentkoppelung bei gleichzeitig relativ stabiler Führung des Griffelementes gegenüber dem Lagerelement erzielt werden, wodurch ein besonders komfortabel handhabbarer Seitenhandgriff zur Verfügung gestellt werden kann.

Ferner wird die Aufgabe durch ein Handwerkzeuggerät mit einem der oben genannten Handgriffe gelöst, wobei das Lagerelement dauerhaft an einem Gerätegehäuse des Handwerkzeuggerätes festgelegt ist und der Handgriff an einem von einem werkzeugseitigen ersten Ende des Gerätegehäuses abgewandten zweiten Ende angeordnet ist. Hierdurch kann der Handgriff auch als Haupthandgriff verwendet werden, der durch die Entkopplungseinrichtung zumindest teilweise gegenüber dem restlichen Handwerkzeuggerät schwingungsentkoppelt ist. Zur Erhöhung der Stabilität kann dabei beabstandet zur Entkopplungseinrichtung eine zweite baugleiche oder sonstige Entkopplungseinrichtung zwischen dem Griffelement und dem Handwerkzeuggerät vorgesehen sein.

In einer besonders vorteilhaften Ausführungsform sind dabei die Entkopplungselemente im Wesentlichen parallel zu einer Längsachse des Handwerkzeuggerätes ausgerichtet und um einen Aufnahmeraum herum angeordnet, in den wenigstens ein Antriebselement des Handwerkzeuggerätes teilweise hinein ragt. Auf diese Weise kann auch der Raum zwischen den Entkopplungselementen genutzt werden, wodurch der für das Handwerkzeuggerät benötigte Bauraum insgesamt verkleinert wird.

Bevorzugterweise sind genau sechs Entkopplungselemente vorgesehen. Bei dieser Anzahl der Entkopplungselemente konnte eine besonders stabile Führung des Griffelementes gegenüber dem Lagerelement bei gleichzeitig relativ guter Schwingungsentkoppelung erzielt werden, wodurch ein besonders komfortabel handhabbarer Haupthandgriff zur Verfügung gestellt werden kann.

Die Erfindung wird nachstehend anhand eines Ausführungsbeispieles näher erläutert. Es zeigen:
- Fig. 1: eine Ansicht eines Handwerkzeuggerätes mit einem erfindungsgemässen Haupthandgriff mit Entkopplungseinrichtung sowie einem erfindungsgemässen Seitenhandgriff mit Entkopplungseinrichtung,
- Fig. 2: eine perspektivische Ansicht einer alternativen Entkopplungseinrichtung des Seitenhandgriffes mit vier Entkopplungselementen und
- Fig. 3: eine perspektivische Ansicht einer weiteren alternativen Entkopplungseinrichtung des Haupthandgriffes mit sechs Entkopplungselementen.

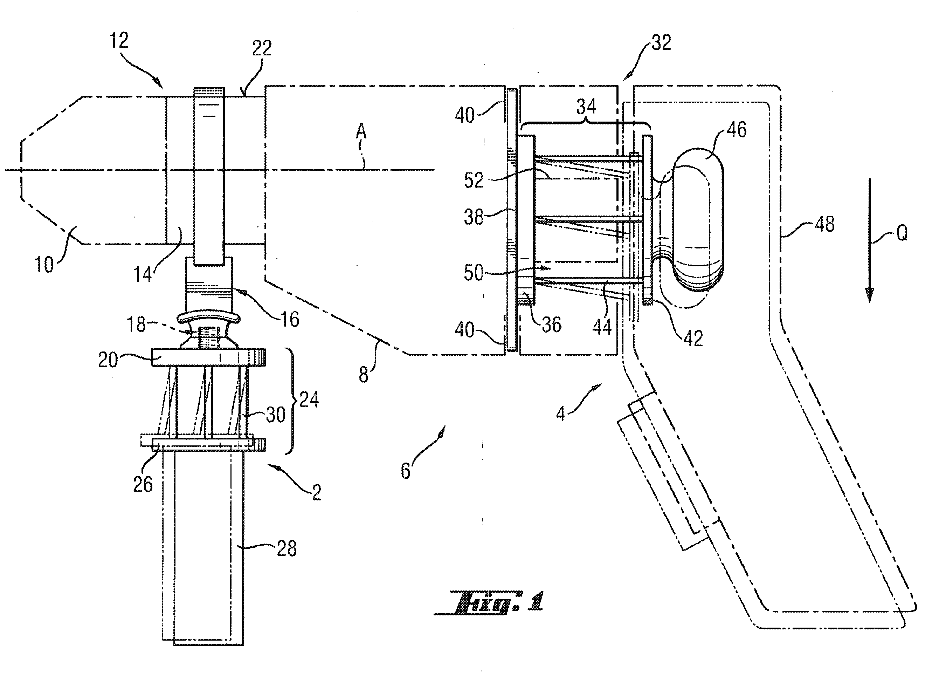

Fig. 1 zeigt einen als Seitenhandgriff ausgebildeten bedarfsweise verwendbaren Zusatzhandgriff 2 und einen Haupthandgriff 4 eines Handwerkzeuggerätes 6, in Form eines Bohr- oder Meisselgerätes. Alternativ können der Zusatzhandgriff 2 und der Haupthandgriff 4 auch an einer elektrischen Hubsäge oder einem Schleifgerät, insbesondere einem Winkelschleifgerät, verwendet werden.

Das Handwerkzeuggerät 6 weist ein Gerätegehäuse 8 auf, das sich im Wesentlichen entlang einer Längsachse A erstreckt. An einem einer Werkzeugaufnahme 10 zugewandten ersten Ende 12 weist das Gerätegehäuse 8 einen Gehäusehals 14 auf. An dem der Zusatzhandgriff 2 befestigt ist. Hierzu weist der Zusatzhandgriff 2 erste Befestigungsmittel 16 in Form einer Spannbandvorrichtung auf, die über eine Schraubverbindung 18 mit einem plattenförmigen ersten Lagerelement 20 verbunden sind. Die ersten Befestigungsmittel 16 sind dabei an einer als erste Gegenbefestigungsmittel 22 dienenden zylindrischen Oberfläche des Gerätehalses 14 lösbar fest gespannt.

Das plattenförmige erste Lagerelement 20 dient als gehäusefestes Teil einer insgesamt mit 24 bezeichneten ersten Entkopplungseinrichtung. Diese weist ferner ein erstes Verbindungselement 26 auf, das mit einem als Griffhülse ausgeformten ersten Griffelement 28 fest verbunden ist. Das Verbindungselement 26 ist dabei über drei stabförmige erste Entkopplungselemente 30 aus Federstahldraht an dem ersten Lagerelement 20 gehalten.

An einem vom ersten Ende 12 abgewandten zweiten Ende 32 des Gerätegehäuses 8 ist eine insgesamt mit 34 bezeichnete zweite Entkopplungseinrichtung angeordnet. Diese weist ein zweites Lagerelement 36 auf, das mit zweiten Befestigungsmitteln 38 in Form einer Trägerplatte fest verbunden ist. Die zweiten Befestigungsmittel 38 sind dabei durch zweite Gegenbefestigungsmittel 40 am Gerätegehäuse 8 befestigt, die durch nutförmige Aufnahmen gebildet sind.

Ferner weist die zweite Entkopplungseinrichtung 34 ein zweites Verbindungselement 42 auf, das über drei stabförmige zweite Entkopplungselemente 44 aus Federstahldraht an dem zweiten Lagerelement 36 gehalten ist. Alternativ zu der Verwendung von Federstahldraht können die ersten Entkopplungselemente 30 und die zweiten Entkopplungselemente 44 auch aus faserverstärkten Kunststoffen hergestellt sein.

An dem Verbindungselement 42 ist ein Lagerknauf 46 ausgeformt, an dem ein durch ein Griffgehäuse geformtes zweites Griffelement 48, das den Haupthandgriff 4 des Handwerkzeuggerätes 6 bildet, in nicht näher dargestellter Weise befestigt ist.

Wie aus Fig. 1 ferner zu entnehmen ist, sind die zweiten Entkopplungselemente 44 um einen Aufnahmeraum 50 herum angeordnet, in den ein Antriebselement 52 des Handwerkzeuggerätes 6 teilweise hineinragt, das beispielsweise durch einen Motor, ein Getriebe, ein Schlagwerk oder ein Subgehäuse derselben gebildet sein kann.

Im Betrieb entstehen insbesondere parallel zur Längsachse A und entlang einer dazu senkrecht stehenden Querrichtung Q Vibrationen am Gerätegehäuse 6.

Durch die ersten Entkopplungselemente 30 kann das erste Griffelement 28, wie durch strichpunkt-punkt Linien dargestellt, relativ zum ersten Lagerelement 20 beziehungsweise zum Handwerkzeuggerät 6 bewegt werden. Hierbei ist das erste Griffelement 28 durch die elastisch auslenkbaren ersten Entkopplungselemente 30 der ersten Entkopplungseinrichtung 24 zwangsgeführt, wobei die ersten Entkopplungselemente 30 auch während der ausschwingenden Bewegung jederzeit zueinander parallel ausgerichtet sind. Somit steht das erste Griffelement 28 permanent senkrecht zur Längsachse A und wird zu dieser im Wesentlichen parallel bewegt.

Hierdurch wird das erste Griffelement 28 weitestgehend von im Betrieb auftretenden Vibrationen des Handwerkzeuggerätes 6 in Richtung der Längsachse A entkoppelt, während in die Querrichtung eine relativ stabile Führung über das erste Griffelement 28 erhalten bleibt.

Gleichzeitig kann durch die zweite Entkopplungseinrichtung 34 im Betrieb das Zweite Griffelement 48, wie durch strich-doppelpunktierte Linie dargestellt, relativ zum zweiten Lagerelement 36 beziehungsweise zum Handwerkzeuggerät 6 bewegt werden. Hierbei ist das Zweite Griffelement 48 durch die zueinander elastisch auslenkbaren zweiten Entkopplungselemente 44 der zweiten Entkopplungseinrichtung 34 zwangsgeführt, wobei die zweiten Entkopplungselemente 44 auch während der ausschwingenden Bewegung jederzeit zueinander parallel ausgerichtet sind. Somit steht das zweite Verbindungselement 42 mit dem daran gehaltenen Zweiten Griffelement 48 permanent senkrecht zur Längsachse A und wird dabei im Wesentlichen parallel zur Querrichtung Q geführt.

Hierdurch wird das Zweite Griffelement 48 weitestgehend von im Betrieb auftretenden Vibrationen des Handwerkzeuggerätes 6 in Querrichtung Q entkoppelt, während in Richtung der Längsachse A eine relativ stabile Führung über das erste Griffelement 28 erhalten bleibt.

Darüber hinaus bewirken beide Entkopplungseinrichtung 24, 34 zusätzlich eine Schwingungsentkopplung in eine nicht näher dargestellte Lateralrichtung, die sowohl zur Längsachse A als auch zur Querrichtung Q senkrecht steht, wobei in dieser Lateralrichtung üblicherweise nur sehr geringe Vibrationen auftreten.

Alternativ zu dem gezeigten Ausführungsbeispiel mit jeweils einer Entkopplungseinrichtung 24, 34 am Zusatzhandgriff 2 und am Haupthandgriff 4 ist es selbstverständlich auch möglich nur einen der beiden Handgriffe 2, 4 mit einer entsprechenden Entkopplungseinrichtung 24, 34 vorzusehen. Ferner ist es alternativ möglich, den Haupthandgriff 4 D-förmig auszubilden und dabei die Entkopplungseinrichtung 34 an beiden Lagerpunkten vorzusehen.

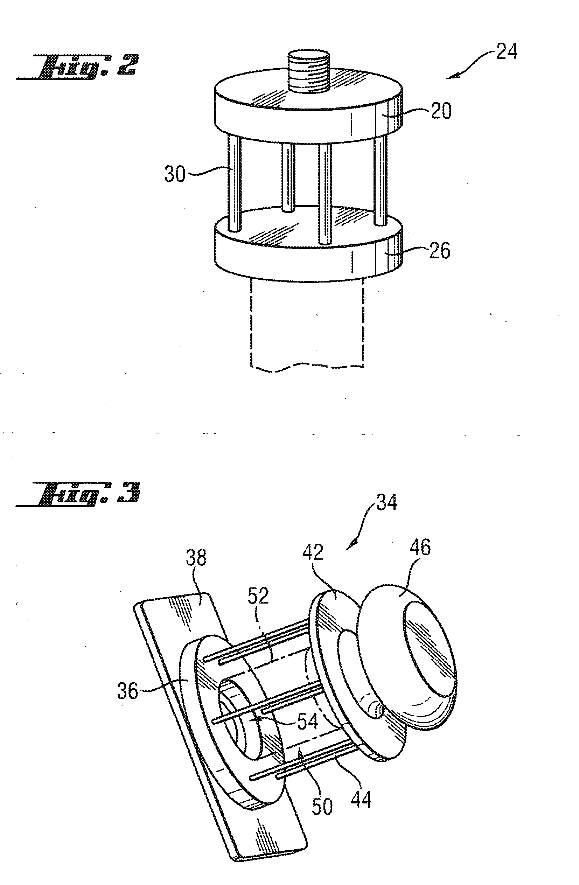

Fig. 2 zeigt eine alternative Ausführungsform der ersten Entkopplungseinrichtung 24 mit besonders günstigen schwingungsisolierenden Eigenschaften. Hierbei sind zwischen dem ersten Lagerelement 20 und dem ersten Verbindungselement 26 genau vier erste Entkopplungselemente 30 vorgesehen.

Fig. 3 zeigt eine alternative Ausführungsform der zweiten Entkopplungseinrichtung 34 mit besonders hoher Stabilität. Hierbei sind zwischen dem zweiten Lagerelement 36 und dem zweiten Verbindungselement 42 genau sechs zweite Entkopplungselemente 44 vorgesehen. Ferner ist hieraus eine Durchtrittsöffnung 54 des Lagerelementes 36 und der zweiten Befestigungsmittel 38 zu entnehmen, durch die das Antriebselement 52 in den Aufnahmeraum 50 hineinragt, um eine kompakte Bauform des Handwerkzeuggerätes 6 zu ermöglichen.

## Patentansprüche

1. Handgriff (2; 4) für ein Handwerkzeuggerät (6),
der ein Griffelement (28; 48) und
ein Lagerelement (20; 36) zur Festlegung an dem Handwerkzeuggerät (6) aufweist,
die über eine Entkopplungseinrichtung (24; 34) zur teilweisen Schwingungsentkoppelung des Griffelementes (28; 48) vom Lagerelement (20; 36) verbunden sind,
wobei das Griffelement (28; 48) durch die Entkopplungseinrichtung (24; 34) gegenüber dem Lagerelement (20; 36) lagefest geführt ist,
**dadurch gekennzeichnet, dass** die Entkopplungseinrichtung (24; 34) wenigstens drei zueinander beabstandete stabförmige Entkopplungselemente (30; 44) aufweist, die parallel zueinander angeordnet sind.

2. Handgriff nach Anspruch 1, **dadurch gekennzeichnet, dass** die Entkopplungselemente (30; 44) durch ein drahtförmiges Material gebildet sind.

3. Handgriff nach Anspruch 2, **dadurch gekennzeichnet, dass** das drahtförmige Material aus Federstahl gebildet ist.

4. Handgriff nach Anspruch 2, **dadurch gekennzeichnet, dass** das drahtförmige Material aus Faserkunststoffen hergestellt ist.

5. Handgriff nach einem der Ansprüche 1 bis 4, **dadurch gekennzeichnet, dass** an dem Lagerelement (20) Befestigungsmittel (16) vorgesehen sind, die an Gegenbefestigungsmitteln (22) des Handwerkzeuggerätes (6) lösbar befestigbar sind.

6. Handgriff nach Anspruch 5, **dadurch gekennzeichnet, dass** genau vier Entkopplungselemente (30) vorgesehen sind.

7. Handwerkzeuggerät (6) mit einem Handgriff (4) nach einem der Ansprüche 1 bis 4, **dadurch gekennzeichnet, dass** das Lagerelement (36) dauerhaft an einem Gerätegehäuse (8) des Handwerkzeuggerätes (6) festgelegt ist, wobei der Handgriff (4) an einem von einem werkzeugseitigen ersten Ende (12) des Gerätegehäuses (8) abgewandten zweiten Ende (32) angeordnet ist.

8. Handwerkzeuggerät nach Anspruch 7, **dadurch gekennzeichnet, dass** die Entkopplungselemente (44) im Wesentlichen parallel zu einer Längsachse (A) des Handwerkzeuggerätes (6) ausgerichtet sind und dabei um einen Aufnahmeraum (50) herum angeordnet sind, in den ein Antriebselement (52) teilweise hinein ragen.

9. Handwerkzeuggerät nach Anspruch 7 oder 8, **dadurch gekennzeichnet, dass** genau sechs Entkopplungselemente (44) vorgesehen sind.

## Claims

1. Handle (2; 4) for a hand-held tool (6), which comprises a grip element (28; 48) and a bearing element (20; 36) for fixing to the hand-held tool (6), which are connected via a decoupling device (24; 34) for partial vibration decoupling of the grip element (28; 4E) from the bearing element (20; 36), wherein the grip element (28; 48) is positionally fixed by the decoupling device (24; 34) in relation to the bearing element (20; 36), **characterised in that** the decoupling device (24; 34) has at least three rod-shaped decoupling elements (30; 44) spaced apart from one another and arranged parallel to one another.

2. Handle according to claim 1, **characterised in that** the decoupling elements (30; 44) are made from a wire-shaped material.

3. Handle according to claim 2, **characterised in that** the wire-shaped material is made from spring steel.

4. Handle according to claim 2, **characterised in that** the wire-shaped material is made from fibre-reinforced plastics.

5. Handle according to one of the claims 1 to 4, **characterised in that** fastening means (16) which can be detachably fastened to counter-fastening means (22) of the hand-held tool (6) are provided on the bearing element (20).

6. Handle according to claim 5, **characterised in that** exactly four decoupling elements (30) are provided.

7. Hand-held tool (6) comprising a handle (4) according to one of the claims 1 to 4, **characterised in that** the bearing element (36) is permanently fastened to a device housing (8) of the hand-held tool (6), wherein the handle (4) is arranged at a second end (32) of the device housing (8) facing away from a tool-side first and (12) of the device housing (8).

8. Hand-held tool according to claim 7, **characterised in that** the decoupling elements (44) are oriented essentially parallel to a longitudinal axis (A) of the hand-held tool (6) and are arranged round a receptacle chamber (50) into which a drive element (52) partially extends.

9. Hand-held tool according to claim 7 or 8, **characterised in that** exactly six decoupling elements (44) are provided.

## Revendications

1. Poignée (2 ; 4) pour un outil à main (6), comportant
un élément de prise (28 ; 48) et
un élément de support (20 ; 36) pour une fixation sur l'outil à main (6),
lesdits éléments étant reliés par un dispositif de désaccouplement (24 ; 34) pour un désaccouplement partiel des vibrations de l'élément de prise (28 ; 48) et de l'élément de support (20 ; 36),
l'élément de prise (28 ; 48) étant guidé de manière stabilisée par rapport à l'élément de support (20 ; 36) par l'intermédiaire du dispositif de désaccouplement (24 ; 34),
**caractérisée en ce que** le dispositif de désaccouplement (24 ; 34) comporte au moins trois éléments de désaccouplement (30 ; 44) en forme de tige, espacés les uns des autres et agencés parallèlement les uns aux autres.

2. Poignée selon la revendication 1, **caractérisée en ce que** les éléments de désaccouplement (30 ; 44) sont formés par un matériau en forme de fil.

3. Poignée selon la revendication 2, **caractérisée en ce que** le matériau en forme de fil est formé à partir d'un acier à ressort.

4. Poignée selon la revendication 2, **caractérisée en ce que** le matériau en forme de fil est fabriqué en une matière plastique fibreuse.

5. Poignée selon l'une quelconque des revendications 1 à 4, **caractérisée en ce que** sur l'élément de support (20) sont prévus des moyens de fixation (16) qui peuvent être fixés de manière amovible sur des moyens de fixation conjugués (22) de l'outil à main (6).

6. Poignée selon la revendication 5, **caractérisée en ce qu'**exactement quatre éléments de désaccouplement (30) sont prévus.

7. Outil à main (6) comportant une poignée (4) selon l'une quelconque des revendications 1 à 4, **caractérisé en ce que** l'élément de support (36) est fixé de manière permanente sur un boîtier (8) de l'outil à main (6), la poignée (4) étant agencée sur une seconde extrémité (32) opposée à une première extrémité côté outil (12) du boîtier (8).

8. Outil à main selon la revendication 7, **caractérisé en ce que** les éléments de désaccouplement (44) sont orientés de manière sensiblement parallèle à un axe longitudinal (A) de l'outil à main (6), et sont ainsi agencés autour d'un espace de réception (50) dans lequel un élément d'entraînement (52) fait partiellement saillie.

9. Outil à main selon la revendication 7 ou 8, **caractérisé en ce qu'**exactement six éléments de désaccouplement (44) sont prévus.
